(19) Europäisches Patentamt
European Patent Office
Office européen des brevets

(11) **EP 2 509 781 B1**

(12) **EUROPEAN PATENT SPECIFICATION**

(45) Date of publication and mention
of the grant of the patent:
**04.03.2015 Bulletin 2015/10**

(51) Int Cl.:
**B29D 30/72** *(2006.01)*    **B60C 13/00** *(2006.01)*
**C08J 7/04** *(2006.01)*

(21) Application number: **10810874.7**

(22) Date of filing: **09.12.2010**

(86) International application number:
**PCT/IB2010/003166**

(87) International publication number:
**WO 2011/070429 (16.06.2011 Gazette 2011/24)**

(54) **METHOD OF PRODUCING COLOURED PORTIONS ON A TYRE AND TYRE OBTAINED SAID METHOD**

VERFAHREN ZUR HERSTELLUNG VON GEFÄRBTEN TEILEN EINES REIFENS UND DAMIT HERGESTELLTER REIFEN

PROCÉDÉ DE FORMATION DE PORTIONS COLORÉES SUR UN PNEU ET PNEU AINSI OBTENU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2009 IT TO20090964**

(43) Date of publication of application:
**17.10.2012 Bulletin 2012/42**

(73) Proprietor: **Bridgestone Corporation**
**Chuo-ku**
**Tokyo 104-8340 (JP)**

(72) Inventors:
• **COTUGNO, Salvatore**
**I-00131 Roma (IT)**
• **SILICANI, José Antonio**
**I-00046 Grottaferrata (IT)**
• **STRAFFI, Paolo**
**I-00151 Roma (IT)**

(74) Representative: **Bosman, Cesare et al**
**Studio Torta S.p.A.**
**Via Viotti, 9**
**10121 Torino (IT)**

(56) References cited:
| | |
|---|---|
| **EP-A- 0 972 794** | **EP-A1- 1 625 952** |
| **EP-A2- 0 873 887** | **WO-A2-2008/002744** |
| **WO-A2-2009/071562** | **US-A- 4 857 397** |
| **US-A- 5 320 874** | **US-A- 6 030 676** |
| **US-A1- 2003 201 202** | **US-A1- 2004 131 787** |

EP 2 509 781 B1

**Description**

TECHNICAL FIELD

The present invention relates to a method of producing coloured portions on a tyre and to a tyre obtained by said method.

BACKGROUND ART

In recent years, demand has arisen in the tyre industry for producing coloured portions on tyres for various purposes, not least of all for aesthetic reasons.
Techniques adopted so far are based on producing rubber mixes dyed with appropriate pigments.
The most commonly used techniques substantially comprise using three layers: a buffer layer on the inner layers of the tyre; a coloured layer made from the dyed mix referred to above; and an outer cover layer, which is removed prior to marketing.
The drawback of this method lies in deterioration of the coloured portion, mainly due to chemical agents migrating from the inner layers of the tyre to the dyed mix. To slow down deterioration, the common practice is to increase the thickness of the coloured layer, which invariably poses problems in terms of heat generation and, therefore, rolling resistance.
Document US 6,030,676 discloses a tyre comprising a decorative laminate comprising three layers wherein the outer layer is a transparent covering layer. Document EP 0 972 794 A discloses a cement for producing tyres comprising an emulsifier that is universally effective over the various ingredients of the cement.

DISCLOSURE OF INVENTION

It is an object of the present invention to provide a method of producing coloured portions on a tyre, designed to eliminate the drawbacks of the known art.
According to the present invention, there is provided a method of producing coloured portions on a tyre; said method being characterized by comprising the steps of:

- producing a highly impermeable protective layer by depositing a water-based emulsion on a tyre part to be coloured; and
- applying a water-based paint to said protective layer.

The water-based emulsion comprises at least a cross-linkable polymer base, and a surface-active agent of molecular formula (I)

$$(R_1CONR_2CHR_3COO^-)_nX^{n+} \qquad (I)$$

where:

$R_1$ is an aliphatic group $C_6$-$C_{23}$,
$R_2$ is H or an aliphatic group $C_1$-$C_8$,
$R_3$ is H or an aliphatic or aromatic group $C_1$-$C_8$,
X is a metal cation, preferably an alkaline cation, and
n is an integer of 1 to 3.

The aliphatic group $R_1$ preferably comprises a double bond.
$X^{n+}$ is preferably $Na^+$.
The surface-active agent preferably has a molecular formula in the group comprising:

$$CH_3(CH_2)_7CHCH(CH_2)_7CONHCH_2COO^- X^+;$$

and

$$CH_2CH(CH_2)_8CONHCH_2COO^- X^+.$$

The fillers are preferably in the group comprising kaolin, clay, mica, feldspar, silica, graphite, bentonite, and alumina.

The cross-linkable polymer base preferably comprises polymers with a Tg > 0°C.

The method according to the present invention preferably comprises a preliminary step of laser carving said part of the tyre to be coloured.

Said water-based paint preferably comprises UV curing photoactivators.

Said coloured portion is preferably heat treated further to improve its mechanical properties.


BEST MODE FOR CARRYING OUT THE INVENTION

The following are purely non-limiting examples to give a clearer understanding of the invention.


EXAMPLES

The following is a description of mixes from which to make the protective layers of the present invention.

These mixes are all characterized by being highly impermeable, as a result of using high-Tg polymers or large amounts of clay.

Use of high-Tg polymers and mineral fillers is made possible by the mixes being made from water-based emulsions comprising at least a surface-active agent of molecular formula (I). Producing mixes using the traditional Banbury mixer method, mixing components such as high-Tg polymers or mineral fillers would take too much power, and so be unviable both ecologically and economically. Being mixed in emulsion, the mixes according to the present invention, on the other hand, all require the same amount of energy, regardless of the components used.

The protective layers are therefore made from the resulting mixes, by depositing a water-based emulsion on a tyre part for colouring, e.g. the sidewall, and then evaporating the water.

The water-based emulsions are each produced by dispersing and mixing the various mix components in water, and more specifically by dispersing all the components in Table I simultaneously in 1 L of water. The resulting aqueous dispersion is stirred mechanically for 30 minutes and then sonicated for 15 minutes to obtain a water-based emulsion.

The above method of producing the water-based emulsions in no way constitutes a limitation of the method according to the present invention.

The emulsion is sprayed or brushed onto the sidewall of the tyre, and, once applied, the water in the emulsion is evaporated to typically form a roughly 0.3 mm thick protective layer, to which a water-based paint is applied. More specifically, a water-based paint in the group known as "VERNICI IMC IDRO" or "IMC IDROFLEX", produced and marketed by SIVAM VERNICI SPA, is used.

The protective layer and the water-based paint layer may be cross-linked simultaneously with or after curing the tyre. In other words, the painting method may be applied to a cured or green tyre.

Colourfastness was tested to assess the advantages of the invention with respect to the known art.

A fade index $\Delta E$ was used, as established at the 1976 International Commission on Illumination, and defined by the formula:

$$\Delta E = [(\Delta L)^2 + (\Delta a)^2 + (\Delta b)^2]^{1/2}$$

where :

L is luminosity; a is red-green light sensation; and b is yellow-blue light sensation. Fading was measured using a Minolte CM 2002 spectrophotometer.

The difference in colour was determined by comparing the colour on the day the coloured portion was produced, with the colour thirty days later. The 100 $\Delta E$ value corresponds to a complete absence of fading.

Adhesion of the protective layer to the sidewall of the tyre was determined as per ASTM Standard D624.

In the following examples, two different surface-active agents (a, b) in the molecular formula (I) class were used:

- a surface-active agent (a) of molecular formula $CH_3(CH_2)_7CHCH(CH_2)_7CONHCH_2COO^-\ Na^+$; and
- a surface-active agent (b) of molecular formula $CH_2CH(CH_2)_8CONHCH_2COO^-\ Na^+$.

Table I shows the compositions in phr of five mixes A-E made from respective emulsions in accordance with the present invention, and, for each composition, the relative fade value $\Delta E$ and relative adhesion to the tyre sidewall. In mixes A-E, the composition of the polymer base was varied by inserting increasingly high Tg polymers.

TABLE I

|  | A | B | C | D | E |
|---|---|---|---|---|---|
| CI-IIR | 70 | 70 | 70 | 70 | 70 |
| CR | 30 | -- | -- | -- | -- |
| SBR | -- | 30 | -- | -- | -- |
| PMA | -- | -- | 30 | -- | -- |
| PEMA | -- | -- | -- | 30 | -- |
| ABS | -- | -- | -- | -- | 30 |
| CARBON BLACK | 50 | 50 | 50 | 50 | 50 |
| RESIN | 10 | 10 | 10 | 10 | 10 |
| ZnO | 1.5 | 1.5 | 1.5 | 1.5 | 1.5 |
| SULPHUR | 2.8 | 2.8 | 2.8 | 2.8 | 2.8 |
| ACCELERANTS | 1.5 | 1.5 | 1.5 | 1.5 | 1.5 |
| SURFACE-ACTIVE AGENT (a) | 2.0 | 2.0 | 2.0 | 2.0 | 2.0 |
| ΔE | 78 | 90 | 91 | 100 | 100 |
| ADHESION (N/mm) | 3.8 | 4.1 | 3.2 | 2.8 | 2.5 |

CI-IIR stands for chlorobutyl rubber; CR for chloroprene; SBR for styrene-butadiene rubber; PMA for polymethacrylate; PEMA for polyethylmethylacrylate; and ABS for acrylonitrile butadiene styrene thermopolymer.

As shown clearly in Table I, the method according to the present invention provides for highly effective colouring in terms of fastness, as well as satisfactory adhesion of the protective layer to the coloured tyre portion.

Table II shows the compositions in phr of three mixes F-H made from respective emulsions in accordance with the present invention, and, for each composition, the relative fade value ΔE and relative adhesion to the tyre sidewall. In mixes F-H, clay was inserted in gradually increasing amounts.

TABLE II

|  | F | G | H |
|---|---|---|---|
| CI-IIR | 100 | 100 | 100 |
| CARBON BLACK | 50 | 50 | 50 |
| CLAY | 30 | 70 | 110 |
| RESIN | 10 | 10 | 10 |
| ZnO | 1.5 | 1.5 | 1.5 |
| SULPHUR | 2.8 | 2.8 | 2.8 |
| ACCELERANTS | 1.5 | 1.5 | 1.5 |
| SURFACE-ACTIVE AGENT (b) | 2.0 | 2.0 | 2.0 |
| ΔE | 92 | 95 | 97 |
| ADHESION (N/mm) | 3.0 | 3.5 | 4.2 |

Table II also shows clearly how the method according to the present invention provides for highly effective colouring in terms of fastness and also adhesion to the tyre.

The fillers used in the protective layer according to the present invention preferably comprise mineral particles of 0.2 to 2 μm diameter, and an aspect ratio of 5 to 30 and preferably 8 to 20, and are preferably in the group comprising kaolin, clay, mica, feldspar, silica, graphite, bentonite and alumina.

An important point to note is the much lower cost of the method according to the present invention, as compared with known methods. In fact, producing a mix from a water-based emulsion, as opposed to mixing in a Banbury mixer, enables considerable energy saving, as well as optimum dispersion of the emulsion components, regardless of type.

The method according to the present invention also provides for colouring a tyre, adding only very thin layers of material, with practically no effect on rolling resistance. In fact, the protective layer, being made from a water-based emulsion and a highly impermeable mix, may be made very thin, of a thickness ranging from 0.001 to 0.5 mm.

As stated, the method according to the present invention applies to both cured and green tyres.

When colouring a cured tyre, in a preferred embodiment of the present invention, the tyre part for colouring is first carved with a laser, e.g. a $CO_2$ laser, to form a groove pattern, over which the protective layer and paint layer are applied to grip them mechanically to the tyre and so ensure firmer grip of the paint layer to the tyre. In fact, in addition to chemical adhesion of the protective layer to the tyre surface, mechanical grip by the groove pattern also assists in securing the paint layer to the tyre. The groove pattern also reduces mechanical stress, to prolong the working life of the paint layer.

In another preferred embodiment of the present invention, when colouring a cured tyre, the water-based paint comprises UV curing photoinitiators for fast-curing the paint locally by appropriate UV illumination, without subjecting the cured tyre to additional thermal stress.

Finally, the method according to the present invention preferably comprises a finishing step, in which the coloured part is laser processed to produce an attractive geometric effect on the paint layer, and so reduce the visual effects of in-service fading of the rubber.

## Claims

1.  A method of producing coloured portions on a tyre; said method comprising the steps of:

    - producing a highly impermeable protective layer by depositing a water-based emulsion on a tyre part to be coloured; and
    - applying a water-based paint to said protective layer;
    said water-based emulsion comprising at least a cross-linkable polymer base, and a surface-active agent of molecular formula (I)

    $$(R_1CONR_2CHR_3COO^-)_nX^{n+} \qquad (I)$$

    where:

    $R_1$ is an aliphatic group $C_6$-$C_{23}$,
    $R_2$ is H or an aliphatic group $C_1$-$C_8$,
    $R_3$ is H or an aliphatic or aromatic group $C_1$-$C_8$,
    X is a metal cation, preferably an alkaline cation, and
    n is an integer of 1 to 3.

2.  A method as claimed in Claim 1, **characterized in that** the aliphatic group $R_1$ comprises a double bond.

3.  A method as claimed in one of the foregoing Claims, **characterized in that** $X^{n+}$ is $Na^+$.

4.  A method as claimed in one of the foregoing Claims, **characterized in that** the surface-active agent has a molecular formula in the group comprising:

    $$CH_3(CH_2)_7CHCH(CH_2)_7CONHCH_2COO^- \; X^+;$$

    and

    $$CH_2CH(CH_2)_8CONHCH_2COO^- \; X^+.$$

5.  A method as claimed in one of the foregoing Claims, **characterized in that** said water-based emulsion comprises a mineral filler comprising particles of 0.2 to 2 $\mu$m in diameter, and an aspect ratio of 5 to 30.

6.  A method as claimed in Claim 5, **characterized in that** said mineral filler comprises particles with an aspect ratio of 8 to 20.

7. A method as claimed in Claim 5 or 6, **characterized in that** said mineral filler is in the group comprising kaolin, clay, mica, feldspar, silica, graphite, bentonite, and alumina.

8. A method as claimed in one of the foregoing Claims, **characterized in that** the cross-linkable polymer base comprises at least one polymer of Tg > 0°C.

9. A method as claimed in one of the foregoing Claims, **characterized by** comprising a preliminary step of laser carving said tyre part to be coloured; the preliminary carving step producing a groove pattern onto which said protective layer is deposited.

10. A method as claimed in one of the foregoing Claims, **characterized in that** said water-based paint comprises UV curing photoinitiators.

11. A method as claimed in one of the foregoing Claims, **characterized by** comprising a finishing step, in which the resulting coloured portion is laser processed.

12. A tyre, **characterized by** comprising a coloured portion formed as claimed in one of the foregoing Claims.

**Patentansprüche**

1. Verfahren zur Herstellung gefärbter Teile auf einem Reifen; wobei das Verfahren die folgenden Schritte umfasst:

   - Herstellen einer hoch-undurchlässigen Schutzschicht durch Auftragung einer wasserbasierten Emulsion auf ein zu färbendes Reifenteil; und
   - Anwenden einer wasserbasierten Farbe auf die Schutzschicht; wobei die wasserbasierte Emulsion zumindest eine vernetzbare Polymerbasis, und ein oberflächenaktives Mittel der molekularen Formel (I)

   $$(R_1CONR_2CHR_3COO^-)_n \ X^{n+} \qquad (I)$$

   umfasst, wobei:

   $R_1$ eine aliphatische Gruppe $C_6$-$C_{23}$ ist,
   $R_2$ H oder eine aliphatische Gruppe $C_1$-$C_8$ ist,
   $R_3$ H oder eine aliphatische oder eine aromatische Gruppe $C_1$-$C_8$ ist,
   X ein Metallkation ist, vorzugsweise ein alkalisches Kation, und
   n eine ganze Zahle von 1 bis 3 ist.

2. Verfahren, wie es Anspruch 1 beansprucht ist, **dadurch gekennzeichnet, dass** die aliphatische Gruppe $R_1$ eine Doppelbindung umfasst.

3. Verfahren, wie es in einem der vorangegangenen Ansprüche beansprucht ist, **dadurch gekennzeichnet, dass** $X^{n+}$ $Na^+$ ist.

4. Verfahren, wie es in einem der vorangegangenen Ansprüche beansprucht ist, **dadurch gekennzeichnet, dass** das oberflächenaktive Mittel eine molekulare Formel aufweist in der Gruppe umfassend:

   $$CH_3(CH_2)_7CHCH(CH_2)_7CONHCH_2COO^- \ X^+ ;$$

   und

   $$CH_2CH(CH_2)_8CONHCH_2COO^- \ X^+.$$

5. Verfahren, wie es in einem der vorangegangenen Ansprüche beansprucht ist, **dadurch gekennzeichnet, dass** die wasserbasierte Emulsion einen mineralischen Füllstoff umfasst umfassend Partikel von 0,2 bis 2 $\mu$m im Durchmesser, und einem Seitenverhältnis von 5 bis 30.

6. Verfahren, wie es in Anspruch 5 beansprucht ist, **dadurch gekennzeichnet, dass** der mineralische Füllstoff Partikel mit einem Seitenverhältnis von 8 bis 20 umfasst.

7. Verfahren, wie es in einem der Ansprüche 5 oder 6 beansprucht ist, **dadurch gekennzeichnet, dass** der mineralische Füllstoff in der Gruppe umfassend Kaolin, Ton, Glimmer, Feldspat, Kieselerde, Graphit, Bentonit und Tonerde ist.

8. Verfahren, wie es in einem der vorangegangenen Ansprüche beansprucht ist, **dadurch gekennzeichnet, dass** die benetzbare Polymerbasis zumindest ein Polymer einer Tg > o °C umfasst.

9. Verfahren, wie es in einem der vorangegangenen Ansprüche beansprucht ist, **gekennzeichnet durch** das Umfassen eines vorausgehenden Schritts des Laser-Carvings des zu färbenden Reifenteils; wobei der vorausgehende Carving-Schritt ein Rillenmuster herstellt, auf welches die Schutzschicht aufgetragen wird.

10. Verfahren, wie es in einem der vorangegangenen Ansprüche beansprucht ist, **dadurch gekennzeichnet, dass** die wasserbasierte Farbe UV-härtende Fotoinitiatoren umfasst.

11. Verfahren, wie es in einem der vorangegangenen Ansprüche beansprucht ist, **gekennzeichnet durch** das Umfassen eines abschließenden Schritts, bei dem der resultierende gefärbte Teil Laserbearbeitet wird.

12. Reifen, **gekennzeichnet durch** das Umfassen eines gefärbten Teils, gebildet wie in einem der vorangegangenen Ansprüche beansprucht.


## Revendications

1. Procédé de production de parties colorées sur un pneu ; ledit procédé comprenant les étapes consistant à :

   - produire une couche protectrice hautement imperméable par dépôt d'une émulsion aqueuse sur une partie d'un pneu à colorer ; et
   - appliquer une peinture aqueuse sur ladite couche protectrice ;
   ladite émulsion aqueuse comprenant au moins une base polymère réticulable et un agent tensioactif de formule moléculaire (I)

$$(R_1CONR_2CHR_3COO^-)_nX^{n+} \qquad (I)$$

   dans laquelle :

   $R_1$ est un groupe aliphatique en $C_6$ à $C_{23}$,
   $R_2$ est H ou un groupe aliphatique en $C_1$ à $C_8$,
   $R_3$ est H ou un groupe aliphatique ou aromatique en $C_1$ à $C_8$,
   X est un cation métallique, de préférence un cation alcalin, et
   n est un nombre entier de 1 à 3.

2. Procédé selon la revendication 1, **caractérisé en ce que** le groupe aliphatique $R_1$ comprend une double liaison.

3. Procédé selon l'une quelconque des revendications précédentes, **caractérisé en ce que** $X^{n+}$ est $Na^+$.

4. Procédé selon l'une quelconque des revendications précédentes, **caractérisé en ce que** l'agent tensioactif a une formule moléculaire dans le groupe comprenant :

$$CH_3(CH_2)_7CHCH(CH_2)_7CONHCH_2COO^- X^+ ;$$

   et

$$CH_2CH(CH_2)_8CONHCH_2COO^- X^+.$$

5. Procédé selon l'une quelconque des revendications précédentes, **caractérisé en ce que** ladite émulsion aqueuse comprend une charge minérale comprenant des particules de 0,2 à 2 $\mu$m de diamètre, et un rapport d'aspect de 5 à 30.

**6.** Procédé selon la revendication 5, **caractérisé en ce que** ladite charge minérale comprend des particules avec un rapport d'aspect de 8 à 20.

**7.** Procédé selon la revendication 5 ou 6, **caractérisé en ce que** ladite charge minérale est dans le groupe comprenant le kaolin, l'argile, le mica, le feldspath, la silice, le graphite, la bentonite et l'alumine.

**8.** Procédé selon l'une quelconque des revendications précédentes, **caractérisé en ce que** la base polymère réticulable comprend au moins un polymère de Tg > 0°C.

**9.** Procédé selon l'une quelconque des revendications précédentes, **caractérisé en ce qu'**il comprend une étape préliminaire de sculpture laser de ladite partie de pneu à colorer ; l'étape de sculpture préliminaire produisant un motif de rainure sur lequel ladite couche protectrice est déposée.

**10.** Procédé selon l'une quelconque des revendications précédentes, **caractérisé en ce que** ladite peinture aqueuse comprend des photoinitiateurs durcissables par UV.

**11.** Procédé selon l'une quelconque des revendications précédentes, **caractérisé en ce qu'**il comprend une étape de finition, dans laquelle la partie colorée résultante est traitée au laser.

**12.** Pneu, **caractérisé en ce qu'**il comprend une partie colorée formée selon l'une quelconque des revendications précédentes.

**REFERENCES CITED IN THE DESCRIPTION**

**Patent documents cited in the description**

- US 6030676 A
- EP 0972794 A